# EUROPEAN PATENT SPECIFICATION

(11) **EP 3 026 283 B1**
(45) Date of publication and mention of the grant of the patent: **02.08.2017**
(21) Application number: 14306915.1
(22) Date of filing: 28.11.2014
(51) Int. Cl.: F16C 35/077, F16C 41/00, F16C 25/08

(54) **Rolling bearing assembly**
Wälzlageranordnung
Ensemble de paliers à roulement

(43) Date of publication of application: 01.06.2016
(73) Proprietor: Aktiebolaget SKF, 415 50 Göteborg (SE)
(72) Inventor: Simonin, Anthony, 37100 Tours (FR)
(74) Representative: Tweedlie, Diane Harkness

(56) References cited:
- WO-A1-2010/139677
- FR-A1- 2 826 413
- JP-A- 2011 151 978

## Description

### TECHNICAL FIELD OF THE INVENTION

The invention concerns a rolling bearing assembly.

### BACKGROUND OF THE INVENTION

Sensor bearing units, for example on two-wheelers, generally comprise a bearing and a sensor unit mounted in a housing. The housing is often made of a light metallic alloy including aluminium. At high temperatures, a clearance provoked by thermal dilatation can appear between the housing and the outer ring of the bearing. In such a case, the sensor body could rotate with respect to the housing.

It is known to avoid the clearance by using a steel bushing or sleeve arranged between the housing and the outer ring of the bearing. Some solutions also imply a plastic cap. The steel bushing or the plastic cap is assembled in the housing and the bearing or the sensor bearing is assembled inside the steel bushing or the plastic cap.

The plastic cap has a poor thermal dissipation capacity and increases the temperature of the bearing. The steel bushing is generally mounted first in the housing then the sensor bearing is mounted. This proves difficult because of the steel bushing often comprises a radial portion on one side which make uneasy the integration of the cable output.

It is known from WO 2010/139677 A1 a bearing assembly comprising a rolling bearing including a fixed ring mounted in a sleeve, which is mounted in a housing. The rolling bearing includes a rotating ring mounted on a shaft. The assembly further comprises a sensor unit including an impulse ring fixed to the rotating ring, and a sensing element, which includes a sensor body. Said sensor body is fixed to the fixed ring thanks to a flange having two radial tongues which bear against the sleeve to prevent rotation of the fixed ring. The sleeve serves to take up differential thermal expansion between the housing and the fixed ring.

However, such a bearing assembly does not compensate dimensional tolerances, in particular manufacturing tolerances and misalignment. Moreover, such a design is subject to vibrations that could wear the connection of the sensorized bearing and the housing.

### SUMMARY OF THE INVENTION

The aim of the invention is to provide an improved rolling bearing assembly, in which the integration of a sensor unit is easier.

To this end, the invention concerns a rolling bearing assembly, comprising a bearing including a rotating ring and a stationary ring, a sleeve in which the stationary ring of the bearing is mounted, a housing in which the sleeve is mounted, a shaft with which the rotating ring of the bearing is coupled in rotation with respect to the housing and a sensor unit including an impulse ring coupled in rotation to the rotating ring and a sensing unit comprising at least one sensing element mounted in a sensor body. This rolling bearing assembly further comprises a pre-stressing element for pre-stressing the stationary ring, adapted to exert a pre-stressing force between the housing and the stationary ring. The sleeve, on the one hand, supports both the stationary ring of the bearing and the sensor body and, on the other hand, compensates thermal dilatations between the housing and the stationary ring.

According to the invention, the pre-stressing element is mounted in a chamber extending between an axial surface of the sensor body and a radial portion of the sleeve.

Thanks to the invention, the integration of the sensor unit is easier than in the prior art assemblies, and improves the liability of the rolling bearing assembly.

According to further aspects of the invention which are advantageous but not compulsory, such a rolling bearing assembly may incorporate one or several of the following features:
- The sensor body is mounted axially between the bearing and a radially extending portion of the sleeve.
- The sensor body comprises a peripheral groove in which an inwardly extending radial portion of the sleeve is received.
- The pre-stressing element is a wavy spring.
- The sensor body is attached to the sleeve by means selected amongst over molding, elastic mounting, gluing or welding.
- The sensor unit is adapted to transmit sensed data via wire transmission.
- The sensor unit comprises an axial transmission cable output.
- The sensor unit comprises a radial transmission cable output.
- The sensor unit is adapted to transmit sensed data via wireless transmission.
- The housing and/or the sleeve are made of a synthetic material.
- The housing and/or the sleeve are made of polyethylene terephthalate.

### BRIEF DESCRIPTION OF THE DRAWINGS

The invention will now be explained in correspondence with the annexed figures, and as an illustrative example, without restricting the object of the invention. In the annexed figures:
- figure 1 is a longitudinal sectional view of a rolling bearing assembly according to the invention;
- figure 2 is a view at a larger scale of detail II on figure 1;

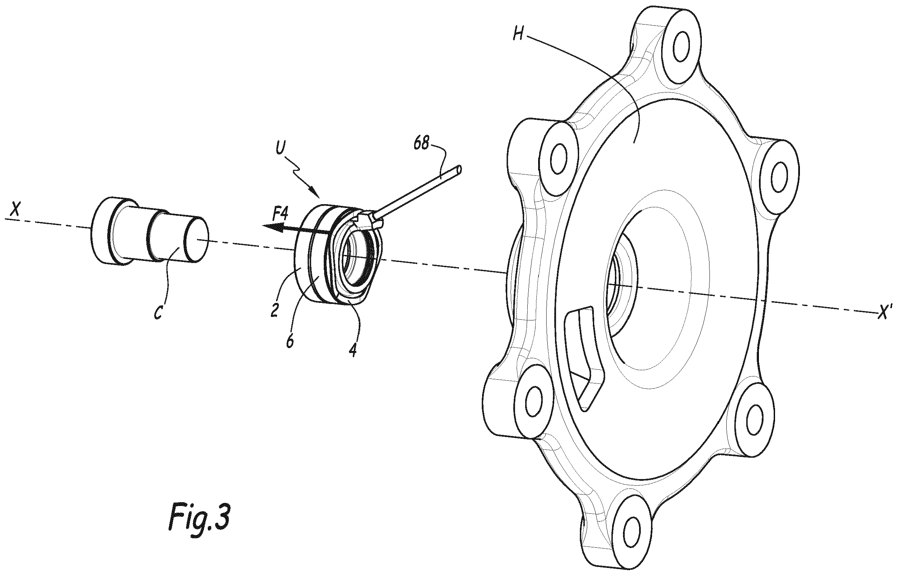

- figure 3 is an exploded perspective view of the rolling bearing assembly of figures 1 and 2;

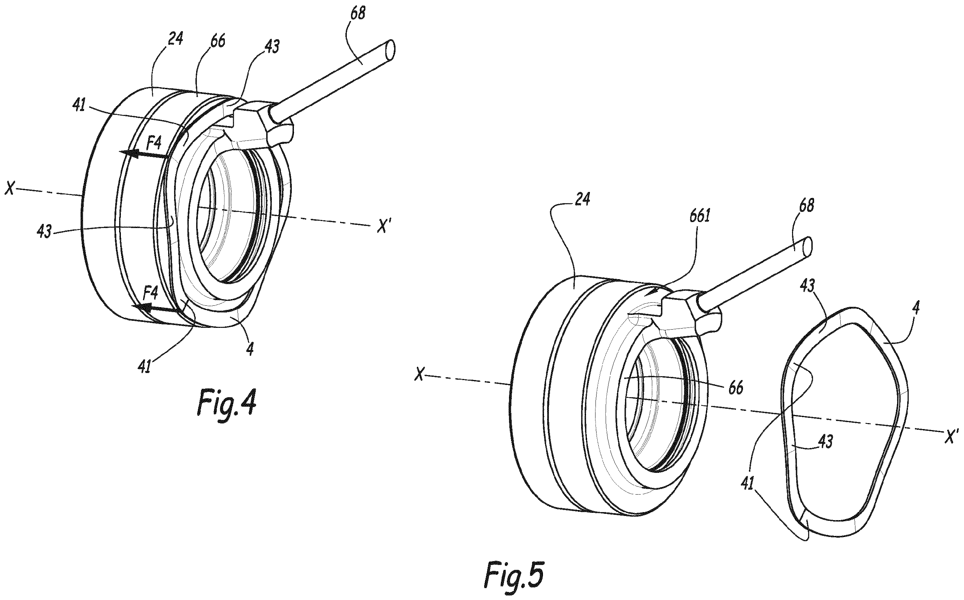

- figure 4 is a perspective view of a bearing, a sensor body and a preloading element belonging to the rolling bearing assembly of figures 1 to 3;
- figure 5 is an partially exploded view of the bearing, the sensor body and the preloading element of figure 4;
- figures 6 and 7 are view similar to figures 4 and 5, for a rolling bearing assembly according to a second embodiment of the invention.

### DETAILED DESCRIPTION OF SOME EMBODIMENTS

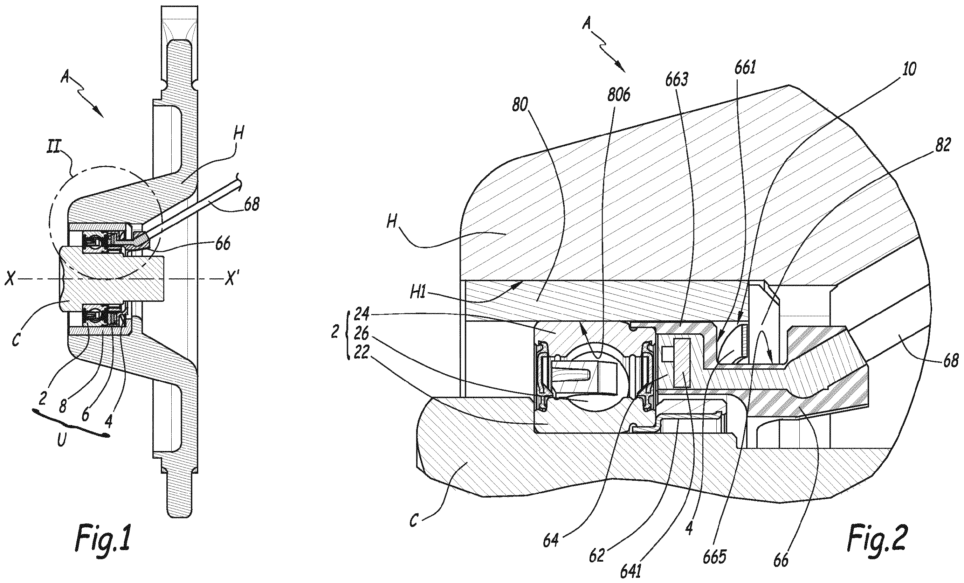

The rolling bearing assembly A represented on figure 1 is adapted to be mounted on an automotive vehicle, such as a motorcycle. The rolling bearing assembly A comprises a shaft C, a housing H and a sensor bearing unit U.

The rolling bearing assembly A defines a central rotation axis X-X'. In this description, the words "axial" and "radial" are used in reference to axis X-X'.

The sensor-bearing unit U comprises a rolling bearing 2 including a rotating ring 22 and a stationary ring 24. In the example, the rotating ring 22 is the inner ring, while the stationary ring 24 is the outer ring. The rolling bearing 2 also includes rolling elements which are balls 26 in this example.

In a non-shown embodiment, the rolling bearing 2 may comprise another type of rolling elements, such as rollers or needles.

The sensor bearing unit U comprises a sensor unit 6 which includes an impulse ring 62 coupled in rotation to the rotating ring 22 and a sensing unit 64 comprising at least one sensing element 641 mounted in a sensor body 66 which is fixed to the stationary ring 24.

The sensor body 66 comprises an axial surface 661 against which the pre-stressing element 4 exerts the pre-stressing force F4. The sensor body 66 transmits the pre-stressing force F4 to the stationary ring 24 thanks to an axial portion 663 which connects the axial surface 661 to the stationary ring 24.

The sensor-bearing unit U includes a sleeve 8 in which the bearing 2 and the sensor body 66 are mounted. The sleeve 8 comprises a cylindrical portion 80 mounted in a bore H1 of the housing H. The cylindrical portion 80 defines an inner bore 800, against which the stationary ring 24 is mounted, the sleeve 8 thereby providing a support for the stationary ring 24.

The sleeve 8 aims at compensating the effects of thermal dilatation, which can cause the bore H1 to enlarge and provoke a clearance between the stationary ring 24 and the housing H.

The mounting of the sensor body 66 on the sleeve 8 facilitates the assembly of the rolling bearing assembly A.

The sleeve 8 is made of a metallic material such as steel.

As an alternative, the sleeve 8 can be made of a synthetic material, such as polyethylene terephthalate (PET). Such a material is light, not much expensive, provides electric isolation properties and is suitable for compensating dilatation of metallic rings such as the outer ring 24.

The housing H may also be made of a synthetic material such as PET. The housing H and the sleeve 8 may both be made of a synthetic material, or only one of the housing H and the sleeve 8 may be made of a synthetic material.

The sensor body 66 may be attached to the sleeve 8 by any convenient means selected amongst, for example, over molding, elastic mounting, gluing or welding.

The sensor unit 6 is adapted to transmit sensed data via wire transmission. The sensor unit 6 therefore comprises an output transmission cable 68. In this example, the cable 68 extends in a slightly angled axial direction. As a non-shown embodiment, the output cable 68 may extend in a purely axial direction.

The sensor bearing unit U further includes an optional pre-stressing element 4 for pre-stressing the stationary ring 24, adapted to exert a pre-stressing force F4 between the housing H and the stationary ring 24. In the example, the pre-stressing element 4 is a wavy spring.

The sleeve 8 comprises an inwardly extending radial portion 82 against which the pre-stressing element 4 is in contact. The axial surface 661 of the sensor body 66 and the radial portion 82 of the sleeve 8 form a chamber in which the pre-stressing element 4 is mounted. The radial portion 82 extends in a circumferential groove 665 of the sensor body 66, which defines the axial surface 661.

The pre-stressing element 4 comprises alternated waves 41, which are in contact with axial surface 661, and 43, which are in contact with radial portion 82.

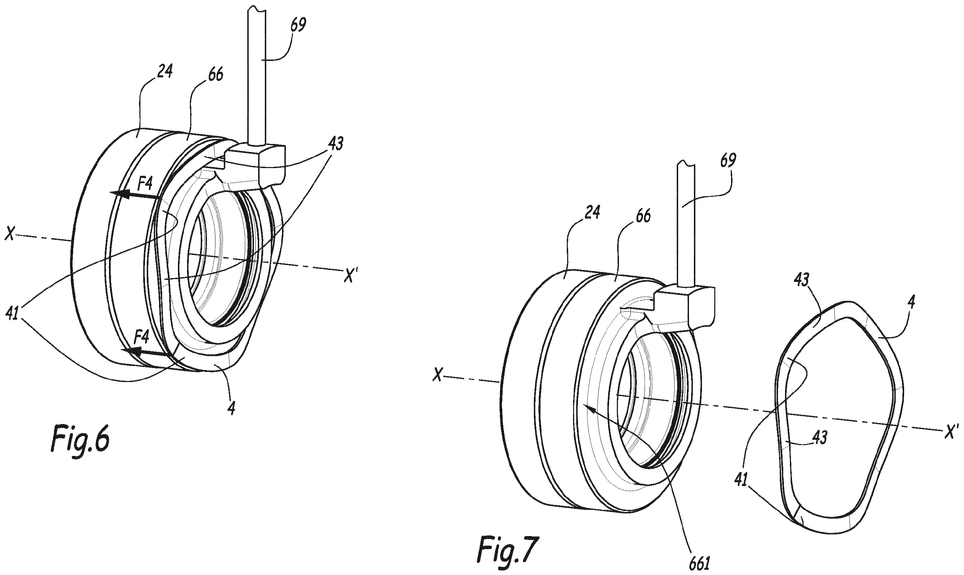

A second embodiment of the invention is represented on figures 6 and 7. In this embodiment, elements similar to the first embodiment have the same references and work in the same way. Only the differences with respect to the first embodiment are described hereafter.

In this embodiment, the sensor unit 6 comprises an output transmission cable 69 which extend in a radial direction.

According to a non-shown embodiment, the sensor bearing unit U may comprise no pre-stressing element 4.

According to a non-shown embodiment, the sensor unit 6 is adapted to transmit sensed data via wireless transmission.

According to another non-shown embodiment, the sensor body 66 may be as a whole inserted axially between the bearing 2 and the radial portion 82.

In addition, technical features of the different embodiments can be, in whole or part, combined with each other to form new embodiments of the invention.

## Claims

1. A rolling bearing assembly (A), comprising:
- a bearing (2) including a rotating ring (22) and a stationary ring (24);
- a sleeve (8) in which the stationary ring (24) of the bearing (2) is mounted
- a housing (H) in which the sleeve (8) is mounted;
- a shaft (C) with which the rotating ring (22) of the bearing (2) is coupled in rotation with respect to the housing (H);
- a sensor unit (6) including an impulse ring (62) coupled in rotation to the rotating ring (22) and a sensing unit (64) comprising at least one sensing element (641) mounted in a sensor body (66),
- a pre-stressing element (4) for pre-stressing the stationary ring (24), adapted to exert a pre-stressing force (F4) between the housing (H) and the stationary ring (24),
the sleeve (8), on the one hand, supporting both the stationary ring (24) of the bearing (2) and the sensor body (66) and, on the other hand, compensating thermal dilatations between the housing (H) and the stationary ring (24), **characterized in that** the bearing further comprises a pre-stressing element (4) for pre-stressing the stationary ring (24), adapted to exert a pre-stressing force (F4) between the housing (H) and the stationary ring (24), the pre-stressing element (4) being mounted in a chamber (10) extending between an axial surface (661) of the sensor body (66) and a radial portion (82) of the sleeve (8).

2. Rolling bearing assembly according to claim 1, wherein the sensor body (66) is mounted axially between the bearing (2) and a radially extending portion (82) of the sleeve (8).

3. Rolling bearing assembly according to claim 1, wherein the sensor body (66) comprises a peripheral groove (665) in which an inwardly extending radial portion (82) of the sleeve (8) is received.

4. Rolling bearing assembly according to one of the previous claims, wherein the pre-stressing element (4) is a wavy spring.

5. Rolling bearing assembly according to one of the previous claims, wherein the sensor body (66) is attached to the sleeve (8) by means selected amongst over molding, elastic mounting, gluing or welding.

6. Rolling bearing assembly according to any one of the previous claims, wherein the sensor unit (6) is adapted to transmit sensed data via wire transmission.

7. Rolling bearing assembly according to claim 6, wherein the sensor unit (6) comprises an axial transmission cable output (68).

8. Rolling bearing assembly according to claim 6, wherein the sensor unit (6) comprises a radial transmission cable output (69).

9. Rolling bearing assembly according to any one of the previous claims, wherein the sensor unit (6) is adapted to transmit sensed data via wireless transmission.

10. Rolling bearing assembly according to one of the previous claims, wherein the housing (H) and/or the sleeve (8) are made of a synthetic material.

11. Rolling bearing assembly according to claim 10, wherein the housing (H) and/or the sleeve (8) are made of polyethylene terephthalate.

## Patentansprüche

1. Wälzlagereinheit (A), umfassend:
- ein Lager (2), das einen rotierenden Ring (22) und einen stationären Ring (24) umfasst;
- eine Lagerbuchse (8), in der der stationäre Ring (24) des Lagers (2) montiert ist;
- ein Gehäuse (H), in dem die Lagerbuchse (8) montiert ist;
- eine Welle (C), mit der der rotierende Ring (22) des Lagers (2) bei der Rotation in Bezug auf das Gehäuse (H) verbunden ist;
- eine Sensoreinheit (6) einschließlich eines Impulsrings (62), der bei der Rotation mit dem rotierenden Ring (22) und einer Abtasteinheit (64) verbunden ist, die mindestens ein Abtastelement (641) umfasst, das in einem Sensorkörper (66) montiert ist,
- ein Vorspannelement (4) zum Vorspannen des stationären Rings (24), das dafür geeignet ist, eine Vorspannkraft (F4) zwischen dem Gehäuse (H) und dem stationären Ring (24) auszuüben,
wobei die Lagerbuchse (8) einerseits sowohl den stationären Ring (24) des Lagers (2) wie auch den Sensorkörper (66) abstützt und andererseits thermische Dehnungen zwischen dem Gehäuse (H) und dem stationären Ring (24) kompensiert,
**dadurch gekennzeichnet, dass** das Lager ferner ein Vorspannelement (4) zum Vorspannen des stationären Rings (24) umfasst, das dafür geeignet ist, eine Vorspannkraft (F4) zwischen dem Gehäuse (H) und dem stationären Ring (24) auszuüben, wobei das Vorspannelement (4) in einer Kammer (10) montiert ist, die sich zwischen einer axialen Fläche (661) des Sensorkörpers (66) und einem radialen Teil (82) der Lagerbuchse (8) erstreckt.

2. Wälzlagereinheit nach Anspruch 1, wobei der Sensorkörper (66) axial zwischen dem Lager (2) und einem sich radial erstreckenden Teil (82) der Lagerbuchse (8) montiert ist.

3. Wälzlagereinheit nach Anspruch 1, wobei der Sensorkörper (66) eine Umfangsnut (665) umfasst, in der ein sich nach innen erstreckender radialer Teil (82) der Lagerbuchse (8) aufgenommen wird.

4. Wälzlagereinheit nach einem der vorherigen Ansprüche, wobei das Vorspannelement (4) ein welliges Federelement ist.

5. Wälzlagereinheit nach einem der vorherigen Ansprüche, wobei der Sensorkörper (66) an der Lagerbuchse (8) auf eine Weise befestigt ist, die unter Formen, elastischem Formen, Kleben oder Schweißen ausgewählt wird.

6. Wälzlagereinheit nach einem der vorherigen Ansprüche, wobei die Sensoreinheit (6) dafür geeignet ist, erfasste Daten durch Drahtübertragung zu übermitteln.

7. Wälzlagereinheit nach Anspruch 6, wobei die Sensoreinheit (6) eine axiale Übertragungskabelausgabe (68) umfasst.

8. Wälzlagereinheit nach Anspruch 6, wobei die Sensoreinheit (6) eine radiale Übertragungskabelausgabe (69) umfasst.

9. Wälzlagereinheit nach einem der vorherigen Ansprüche, wobei die Sensoreinheit (6) dafür geeignet ist, erfasste Daten durch Drahtübertragung zu übermitteln.

10. Wälzlagereinheit nach einem der vorherigen Ansprüche, wobei das Gehäuse (H) und/oder die Lagerbuchse (8) aus einem synthetischen Material hergestellt sind.

11. Wälzlagereinheit nach Anspruch 10, wobei das Gehäuse (H) und/oder die Lagerbuchse (8) aus Polyethylen-Terephthalat hergestellt sind.

## Revendications

1. Ensemble roulement (A), comprenant :
- un palier (2) comportant une bague rotative (22) et une bague fixe (24) ;
- un manchon (8) dans lequel la bague fixe (24) du palier (2) est montée
- un logement (H) dans lequel le manchon (8) est monté ;
- un arbre (C) avec lequel la bague rotative (22) du palier (2) est couplée en rotation par rapport au logement (H) ;
- une unité de capteur (6) comportant une bague à impulsion (62) couplée en rotation à la bague rotative (22) et une unité de détection (64) comprenant au moins un élément de détection (641) monté dans un corps de capteur (66),
- un élément de précontrainte (4) pour précontraindre la bague fixe (24), adapté pour exercer une force de précontrainte (F4) entre le logement (H) et la bague fixe (24),
le manchon (8), d'une part, supportant à la fois la bague fixe (24) du palier (2) et le corps de capteur (66) et, d'une autre part, compensant des dilatations thermiques entre le logement (H) et la bague fixe (24), **caractérisé en ce que** le palier comporte en outre un élément de précontrainte (4) pour précontraindre la bague fixe (24), adapté pour exercer une force de précontrainte (F4) entre le logement (H) et la bague fixe (24), l'élément de précontrainte (4) étant monté dans une chambre (10) s'étendant entre une surface axiale (661) du corps de capteur (66) et une portion radiale (82) du manchon (8).

2. Ensemble roulement selon la revendication 1, dans lequel le corps de capteur (66) est monté axialement entre le palier (2) et une portion s'étendant radialement (82) du manchon (8).

3. Ensemble roulement selon la revendication 1, dans lequel le corps de capteur (66) comprend une gorge périphérique (665) dans laquelle une portion radiale s'étendant vers l'intérieur (82) du manchon (8) est reçue.

4. Ensemble roulement selon l'une des revendications précédentes, dans lequel l'élément de précontrainte (4) est un ressort ondulé.

5. Ensemble roulement selon l'une des revendications précédentes, dans lequel le corps de capteur (66) est fixé au manchon (8) par des moyens sélectionnés parmi le surmoulage, le montage élastique, le collage ou le soudage.

6. Ensemble roulement selon l'une des revendications précédentes, dans lequel l'unité de capteur (6) est adaptée pour transmettre des données détectées par transmission filaire.

7. Ensemble roulement selon la revendication 6, dans lequel l'unité de capteur (6) comprend une sortie de câble de transmission axiale (68).

8. Ensemble roulement selon la revendication 6, dans lequel l'unité de capteur (6) comprend une sortie de câble de transmission radiale (69).

9. Ensemble roulement selon l'une des revendications précédentes, dans lequel l'unité de capteur (6) est adaptée pour transmettre des données détectées par transmission sans fil.

10. Ensemble roulement selon l'une des revendications précédentes, dans lequel le logement (H) et/ou le manchon (8) sont réalisés en un matériau synthétique.

11. Ensemble roulement selon la revendication 10, dans lequel le logement (H) et/ou le manchon (8) sont réalisés en polytéréphtalate d'éthylène.
